# EUROPÄISCHE PATENTSCHRIFT

(11) **EP 0 706 912 B1**
(45) Veröffentlichungstag und Bekanntmachung des Hinweises auf die Patenterteilung: **22.03.2000**
(21) Anmeldenummer: 95115883.1
(22) Anmeldetag: 09.10.1995
(51) Int. Cl.: B60P 1/64, B65D 90/14

(54) **Wechselbehälter**
Interchangeable container
Benne interchangeable

(30) Priorität: 10.10.1994 DE 9416308 U
(43) Veröffentlichungstag der Anmeldung: 17.04.1996
(73) Patentinhaber: WIHAG Nutzfahrzeugtechnik Gesellschaft mit beschränkter Haftung & Co. Kommanditgesellschaft, 33647 Bielefeld (DE)
(72) Erfinder: Franz, Carl, D-42111 Wuppertal (DE)
(74) Vertreter: Strych, Werner Maximilian Josef, Dr.

(56) Entgegenhaltungen:
- EP-A- 0 443 456
- EP-A- 0 585 198
- CH-A- 579 470
- DE-A- 2 003 495
- DE-U- 9 319 064
- DE-U- 9 412 884
- GB-A- 820 391

## Beschreibung

Die Erfindung betrifft Wechselbehälter für LKW u. dgl. gemäß den Merkmalen des Oberbegriffes von Anspruch 1.

Es sind Wechselbehälter in einigen genormten Größen bekannt, die mittels nach unten ausklappbarer Stützbeine vom LKW, Anhänger etc. abgesetzt und auch wieder aufgenommen werden können. Eine gängige Normgröße derartiger Wechselbehälter besitzt eine Länge von 7,45 m (entsprechend EN 283 und 284, Größe C 745).

Bei diesen Wechselbehältern sind neben den Abmessungen auch die Positionen für die im Außenbereich ihres Bodens angeordneten Befestigungsbeschläge festgelegt, in welche ein vom Chassis des LKW nach oben einführbarer, nicht rotationssymmetrischer Befestigungskegel eingeführt werden kann, und nach Drehung um 90° den Wechselbehälter fest auf dem Chassis verriegelt.

Die Stützbeine dieser Wechselbehälter befinden sich dabei gegenüber den Befestigungsbeschlägen - in der Seitenansicht des Wechselbehälters betrachtet - etwas zur Mitte hin versetzt.

Die Stützbeine sind in ihrer Stützposition entlang des Außenbereiches zu den nächstliegenden Enden des Wechselbehälters hin mit einer entfernbaren Strebe gesichert und werden nach Lösen der Strebe auch in diese Richtung hochgeklappt, so daß sie in ihrer Ruheposition unter den Längsaußenkanten des Bodens des Wechselbehälters in entsprechende Haltevorrichtungen eingefahren werden können und nicht nach außen über die Breite des Wechselbehälters vorstehen. Die Sicherungs-Strebe ist verschwenkbar am Stützbein befestigt.

Weiterhin ist es aus der gattungsbildenden DE-A-20 03 495 bekannt, bei einem solchen genormten Wechselbehälter die Stützbeine des Wechselbehälters - in der Seitenansicht betrachtet - nicht von den Befestigungsbeschlägen aus zur Mitte hin, sondern zum äußeren Ende hin versetzt anzuordnen. Allerdings ergibt sich daraus die Notwendigkeit, die Stützbeine nicht in Längsrichtung umzuklappen, da sie dabei die Befestigungsbeschläge überlappen würden. Die Stützbeine werden daher in Querrichtung in die Ruhelage weggeklappt.

Für die Belieferung von unterschiedlichen Verteilerdepots sowie für den Verteilerverkehr sind jedoch auch kleinere Transporteinheiten notwendig. Bekannt sind hier 10-Fuß-Container sowie kleine Wechselbehälter ohne eigene, fest am Wechselbehälter befestigte Stützbeine. Diese können nur mit Fremd-Hebemitteln wie z.B. Gabelstapler oder Kran von den Trägerfahrzeugen auf- und abgesetzt werden.

Auch sind kleine Wechselbehälter bekannt, welche jeweils einen zusätzlichen Befestigungsbeschlag im Stützbein integriert haben (DE-U-9319064.6). Diese Lösung hat jedoch den Nachteil, daß weitere Befestigungsbeschläge mit nicht genormten Anschlußanordnungen erforderlich sind, sowie zusätzliche Befestigungsbeschläge am Trägerfahrzeug, wenn parallel auch genormte Wechselbehälter gefahren werden sollen. Weiterhin ergeben sich dabei Toleranzund Festigkeitsprobleme bei einer Verriegelung auf dem Trägerfahrzeug.

Andere Lösungen bestehen darin, ein Chassis für lange Norm-Wechselbehälter mit zusätzlichen Befestigungsbeschlägen so auszustatten, daß statt dessen auch zwei der halb so großen Container auf dieses Chassis gesetzt werden können (DE-U-9412884.7).

Eine weitere Lösung besteht darin, einen Wechseladapter zu benutzen, der die Länge eines Norm-Wechselbehälters besitzt und die zum Absetzen notwendigen Stützbeine aufweist, aber ansonsten nur aus einem Rahmen bzw. einem plattenartigen Gebilde besteht, auf welches die entsprechenden kleinen Container oder Wechselbehälter aufgesetzt und verriegelt werden können.

In der Länge gegenüber den Norm-Wechselbehältern etwa halbierte Wechselbehälter mit eigenen Stützbeinen wurden bisher nur vereinzelt verwendet, da sich dabei Platzprobleme und gegenseitige Behinderungen zwischen den Stützbeinen und den Befestigungsbeschlägen ergaben, vor allem dann, wenn die Befestigungsbeschläge dieser kleinen Wechselbehälter zumindest im vorderen oder hinteren Bereich auf die Befestigungskegel passen sollen, die auf dem Chassis des LKW bereits für das Aufsetzen eines Norm-Wechselbehältes bzw. eines ISO-Containers vorhanden sind.

Da darüber hinaus sowohl der Versatz der Befestigungsbeschläge von dem vorderen und hinteren Ende als auch von den Seitenkanten aus nach innen genormt ist und ebenso als Stützbeine in ihren Profilabmessungen standardisierte, auf das maximal zulässige Gewicht der Wechselbehälter abgestimmte, Profile verwendet werden, war damit bisher eine zufriedenstellende und dennoch ausreichend kostengünstige Lösung für kleine, quasi halblange, Wechselbehälter nicht möglich.

Es ist daher die Aufgabe gemäß der vorliegenden Erfindung, einen einfachen und kostengünstigen Wechselbehälter zu schaffen, der einerseits so dimensioniert ist, daß zwei dieser Wechselbehälter hintereinander auf einem Chassis für Norm-Wechselbehälter, etwa der Länge 7,45 m, aufgesetzt, befestigt und transportiert werden können und bei dem andererseits die Stützbeine in der Seitenansicht einen ausreichend großen Abstand zueinander aufweisen, obwohl die Stützbeine in Längsrichtung geklappt werden und ohne daß die zulässige Gesamtbreite des Wechselbehälters überschritten wird. Insbesondere soll ein solcher "halber" Wechselbehälter auch die für Normwechselbehälter bereits vorhandenen Befestigungselemente auf dem Chassis des Fahrzeuges nutzen können.

Diese Aufgabe wird bei dem gattungsgemäßen Wechselbehälter durch die kennzeichnenden Merkmale des Anspruchs 1 gelöst. Vorteilhafte Ausführungsformen ergeben sich aus den Unteransprüchen.

Dadurch, daß die Befestigungsbeschläge am Wechselbehälter bezüglich der Quermittelebene symmetrisch angeordnet sind, aber gleichzeitig gegenüber den stirnseitigen Enden des Wechselbehälters den gleichen Abstand einnehmen wie bei den genormten, großen Wechselbehältern, müssen vorhandene LKW- bzw. Anhänger-Chassis, die für Norm-Wechselbehälter bereits ausgerüstet sind, nur noch mit 2 Paar zusätzlichen, weiter zur Mitte hin liegenden Twistlocks zum Eingreifen in die entsprechenden Befestigungsbeschläge nachgerüstet werden, um zwei der erfindungsgemäßen Wechselbehälter aufnehmen zu können.

Würde man bei dieser Anordnung der Befestigungsbeschläge wie bisher üblich die Stützbeine demgegenüber nach innen, also zur Quermittelebene hin versetzt, anordnen, so wäre ihr gegenseitiger Abstand so gering, daß eine sichere Abstützung des Wechselbehälters bei ungleicher Beladung nicht mehr gegeben wäre. Es könnten auch keine Gabelstaplertaschen im mittleren Bereich angeordnet werden, da diese durch die hochgeklappten Stützbeine verdeckt würden.

Daher sind die Stützbeine gegenüber den Befestigungsbeschlägen weiter gegen die stirnseitigen Enden zu angeordnet, was jedoch wieder zur Folge hat, daß das bisherige Hochklappen der Stützbeine zu den stirnseitigen Enden hin nicht mehr möglich ist, da in diesem Falle der verbleibende Abstand zwischen der Schwenkachse der Stützbeine und dem benachbarten stirnseitigen Ende des Wechselbehälters geringer ist als die Länge des Stützbeines in Stützrichtung gemessen.

Auch das Anordnen der lösbaren Sicherungsstrebe im aufgestützten Zustand wird nun vorzugsweise nach innen, also zur Quermittelebene des Wechselbehälters hin, erfolgen, da auf diese Art und Weise der größtmögliche gegenseitige Abstand der Stützbeine in Längsrichtung des Wechselbehälters zueinander erzielt werden kann.

Bei dieser Anordnung sind jedoch die Stützbeine in der hochgeklappten Ruheposition - besonders bei einer Erhöhung der Abstützposition, um mehr Freiheit für die Reifen des Fahrzeuges zu erhalten - so lang, daß sie mit ihren freien Enden die Befestigungsbeschläge überlappen, die ja von der Außenkante etwas nach innen zurückversetzt sind.

Bei einem normgerecht positionierten Befestigungsbeschlag, der üblicherweise aus einem im wesentlichen kubischen Gehäuse mit den notwendigen Öffnungen an der Unterseite und zu den Außenseiten des Wechselbehälters hin ausgestattet ist, verbleibt zwischen dem Gehäuse des Befestigungsbeschlages und der Außenkante des Wechselbehälters zu wenig Raum, um darin ein hochgeklapptes, übliches Stützbein mit einer Profilierung von ca. 80 x 80 mm Außenabmessungen unterzubringen.

Für den von unten in das Gehäuse des Befestigungsbeschlages einzuführenden und zu verdrehenden Befestigungskegel ist jedoch u. U. weniger Raum erforderlich, als es das gesamte Gehäuse des Befestigungsbeschlages beansprucht. Dies vor allem deshalb, weil der Befestigungskegel eben wegen seiner Kegelform in Längsrichtung des Containers betrachtet selbst in gesperrter Querlage von unten nach oben fortschreitend immer weniger seitlichen Raum beansprucht, wobei natürlich berücksichtigt sein muß, daß der Befestigungskegel gegenüber seiner gesperrten, auf dem Boden des Befestigungsbeschlages aufsitzenden Ruhelage vorher hochgehoben wird, und dabei mehr Raum braucht.

Bezüglich der Stützbein-Schrägstrebe wird angestrebt, diese möglichst weit vom Stützbein-Drehpunkt entfernt drehbar anzuordnen, um möglichst geringe spezifische Kräfte an den Lagerungen zu erhalten. Daher soll die Schrägstrebe möglichst lang sein. Im hochgeklappten Zustand des Stützbeines mit parallel dazu gelegter Schrägstrebe ist der Platz hierfür jedoch durch den Befestigungsbeschlag begrenzt.

Weiterhin ist zu beachten, daß es noch weitere Riegelelemente, die sogenannten Bahnzapfen, gibt, die in die gleichen Befestigungsbeschläge eingeführt werden, jedoch eine andere Kontur besitzen, nämlich im unteren Bereich schlanker, im oberen Bereich ebenfalls kegelförmig nach oben hin abnehmend.

Diese Bahnzapfen sind grundsätzlich auf den Eisenbahnwaggons montiert. Die nach oben hin erfolgende Verdickung stellt eine Windsicherung des Containers bzw. Wechselbehälters dar. Der Bahnzapfen hat eine Bohrung für eine zusätzliche Klammersicherung, die bei diesen kleinen, hohen Wechselbehältern auch benötigt wird, da sich der kurze Wechselbehälter sonst bei Rangierstössen in Richtung der Waggonlängsachse aus seinen Zapfanlagen herauskippen kann.

Die vorgeschlagene Detaillösung besteht nun darin, die Gehäuse der Befestigungsbeschläge nicht einfach kubisch zu gestalten, sondern vor allem die zur Außenseite des Wechselbehälters hin gerichtete Außenwand dieses Gehäuses abzuändern:

Eine Möglichkeit besteht darin, diese Außenwand von unten nach oben schräg zur Längsmittelebene des Wechselbehälters hin verlaufen zu lassen.

Eine andere Möglichkeit besteht darin, diese Seitenwand in der Längsbetrachtung gekröpft auszubilden, so daß der untere Bereich weiter außen steht als der obere Bereich, wobei beide durch ein schräges oder rechtwinkliges, ausgeklinktes vorderes und hinteres Tropfblech o. ä. miteinander verbunden sein können und der obere sowie der untere Bereich jeweils vorzugsweise lotrecht angeordnet sind.

Um auch noch die Dicke der Wandstärke der Außenwand selbst zusätzlich als Raum für das Stützbein zur Verfügung zu haben, kann auch auf eine durchgängige Ausbildung der Außenwand des Gehäuses des Befestigungsbeschlages nur im oberen, zurückspringenden Bereich oder auch ganz von oben bis unten verzichtet werden.

Beispielsweise könnten ein oberer, lotrechter Teil und ein demgegenüber nach außen hin versetzter unterer, lotrechter Teil der Aussenwand ohne direkte Verbindung miteinander einerseits mit dem Boden und andererseits mit dem Deckelteil des Gehäuses verbunden sein, dazwischen jedoch eine über die gesamte Länge des Gehäuses offene Lücke klaffen.

Dadurch ist es möglich, daß das in der Ruheposition abgelegte Rechteckprofil des Stützbeines mit seinem unteren inneren, dem Befestigungsbeschlag zugewandten, Eck direkt in diese Lücke hineinragt, dabei aber noch nicht den Befestigungskegel oder den sogenannten Bahnkegel berührt, sofern ein solcher eingesetzt ist.

Eine weitere Möglichkeit besteht darin, den oberen und unteren Bereich dieser Außenwand des Gehäuses zwar direkt miteinander zu verbinden, jedoch nur mit einer äußerst geringen Materialstärke, die keinerlei Beitrag zur Stabilität dieses Gehäuses mehr bietet, sondern nur das Eindringen von Schmutz über diese zusätzliche Öffnung verhindert, wobei jedoch die Gehäuse aufgrund ihrer funktionsbedingten Öffnungen ohnehin nie gegen eindringenden Schmutz gesichert sind.

Zur Erzielung einer großen Schrägstrebenlänge können die erfindungsgemäßen Wechselbehälter - in der Seitenansicht betrachtet - symetrisch zu ihrer Mittel-Querebene - mit Befestigungsbeschlägen ausgestattet werden, welche nach oben hin verjüngend verlaufen. Hierbei wird dem Platzbedarf des Befestigungskegels Rechnung getragen.

Die für den Transport derartiger Wechselbehälter ausgestatteten LKW- und Anhänger-Chassis sollten dabei vorzugsweise neben den insgesamt acht für die Aufnahme von zwei hintereinander angeordneten erfindungsgemäßen Wechselbehältern vorhandenen Twistlocks noch ein weiteres Paar von Twistlocks aufweisen, welche in Längsrichtung zu einem der beiden mittigen Paare von Twistlocks einen Abstand einhält, der dem Längsabstand der Twistlocks bei den erfindungsgemäßen, halben Wechselbehältern entspricht.

Dadurch kann beim Transport von nur einem solchen Wechselbehälter auf einem doppelt langen Chassis dieser Wechselbehälter belastungsoptimiert etwa in die Mitte der vorhandenen Ladefläche gesetzt werden.

Eine Ausführungsform gemäß der Erfindung ist im Folgenden beispielhaft näher beschrieben. Es zeigen:
- Figur 1:: Ansichten des erfindungsgemäßen Wechselbehälters,
- Figur 2:: eine Seitenansicht eines Norm-Wechselbehälters (EN 284),
- Figur 3:: die erfindungsgemäßen Wechselbehälter im Betrieb,
- Figur 4:: Darstellungen eines Norm-Befestigungsbeschlages (EN 284),
- Figur 5:: eine Detaildarstellung eines Befestigungsbeschlages in Seitenansicht des Wechselbehälters,
- Figur 6:: einen Querschnitt durch einen Befestigungsbeschlag mit ausgeklinktem Stützbein,
- Figur 7:: einen Querschnitt durch einen Befestigungsbeschlag mit schräg ausgeklinktem Stützbein,
- Figur 8:: einen Querschnitt durch einen Befestigungsbeschlag mit nicht ausgeklinktem Stützbein beim Aufbau mit festen Seitenwänden,
- Figur 8a:: eine Darstellung ähnlich Figur 8, jedoch mit tiefer angeordnetem Stützbein,
- Figur 9:: eine Aufsicht auf ein eingeklapptes, ausgeklinktes Stützbein,
- Figur 9a:: eine Darstellung ähnlich Figur 9, jedoch mit einem Stützbein mit Ausklinkung an den Kanten,
- Figuren 10:: einen abgestützten Wechselbehälter mit hochliegendem, verschwenkbaren Einhakblech,
- Figuren 11:: Darstellungen ähnlich der Figuren 10 mit tiefliegendem Einhakteil.

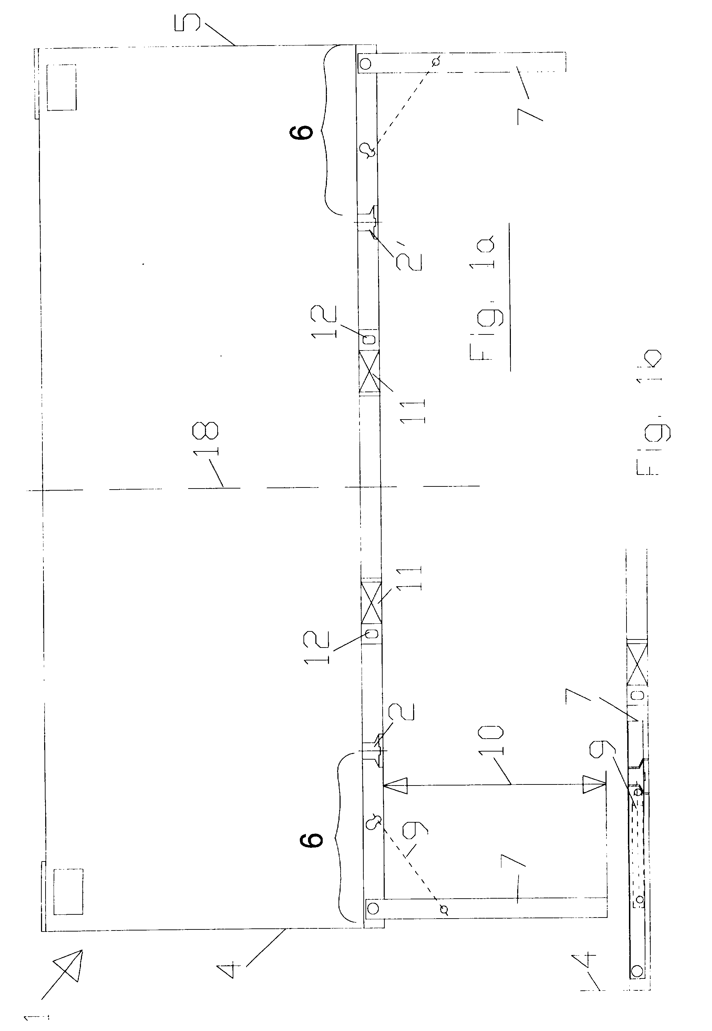

Figur 1 zeigt einen erfindungsgemäßen Wechselbehälter 1 in der Seitenansicht, im aufgestützten Zustand. Dabei sind die Stützbeine 7 in ihre senkrechte Position nach unten geklappt, und mittels der schräg zur Quer-Mittelebene 18 hin nach oben verlaufenden Streben 9 formschlüssig gegen ein Wegklappen gesichert.

Von den vorderen bzw. hinteren Enden 4, 5 des Wechselbehälters 1 aus folgen dann im Bereich von dessen Boden 8 nach innen zu und immer symetrisch zur Quer-Mittelebene 18 die Befestigungsbeschläge 2, 2', die Einhängeösen 12 für Kranhaken etc. und die Öffnungen der Eingrifftaschen 11 für die Gabelstabler-Zinken.

Wie aus der Figur 1b ersichtlich, die das vordere Ende 4 des Wechselbehälters mit in Ruheposition hochgeklapptem Stützbein 7 zeigt, reicht dessen freies Ende sogar bis nahe an die Einhängeöse 12 heran, und überlappt auf jeden Fall den nächstliegenden Befestigungsbeschlag 2. Dabei sind die konkurrierenden Platzverhältnisse zwischen Bodengruppe 8, Stützbein 7, den Einhängeösen 12 und der Schrägstrebe 9 zu erkennen.

Wie ersichtlich, ist dabei die Länge der Strebe 9 und ihr Befestigungspunkt am Stützbein 7 so gewählt, daß nach Lösen der Verbindung zwischen der Strebe 9 und dem Boden 8 des Wechselbehälters 1 die Strebe 9 um ca. 130° bis 140°, zum Stützbein 7 parallele Lage auf der Innenseite des Stützbeines 7 herumgeklappt wird. Beim Hochklappen des Stützbeines endet die Strebe 7 mit ihrem freien Ende dabei noch vor dem nächstliegenden Befestigungsbeschlag 2.

Die Stützbeine 7 befinden sich im ausgeklappten Zustand damit so nahe wie möglich an dem vorderen bzw. hinteren Ende 4, 5 des Wechselbehälters 1, und ergeben damit einen optimal großen gegenseitigen Abstand in Längsrichtung und damit eine sehr sichere Abstützung.

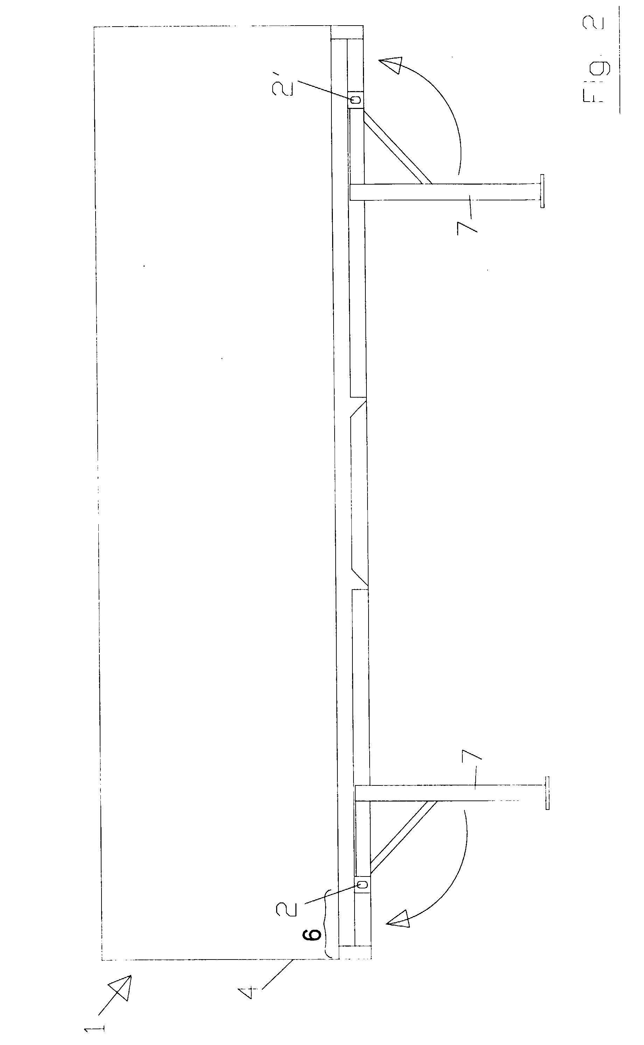

Wie demgegenüber der Figur 2 zu entnehmen, in der ein normal langer Norm-Wechselbehälter in der Seitenansicht dargestellt ist, ergibt sich dadurch ein gegenseitiger Abstand der Stützbeine in Längsrichtung, der beim erfindungsgemäßen, kaum halb so langen Wechselbehälter, annäherend gleich groß ist, wie beim doppelt so langen Norm-Wechselbehälter.

Weiterhin zeigt Figur 2, daß bei diesem bekannten Wechselbehälter die Stützbeine 7 innerhalb der Befestigungsbeschläge 2, 2' gelagert sind, und die Stützbeine sowohl zu den stirnseitigen Enden des Wechselbehälters hin verstrebt sind, als auch in die selbe Richtung zum Verlagern in die Ruheposition weggeklappt werden.

Figur 3 zeigt einen Chassis-Adapterrahmen 29 eines LKWs, Anhängers oder dgl., welcher mit entsprechenden Twistlocks 30 zur Aufnahme zweier hintereinander liegender erfindungsgemäßer Wechselbehälter ausgestattet ist.

Wie ebenfalls dargestellt, ist jedoch darüber hinaus noch ein zusätzliches Paar von Twistlocks 30' vorhanden, von denen in der Seitenansicht in Figur 3 nur einer zu sehen ist, welches zu einem der beiden mittigen Paare von Twistlocks 30' einen solchen Längsabstand aufweist, daß auf die damit vier Twistlocks auch ein einzelner, erfindungsgemäßer Wechselbehälter 1 aufgesetzt werden kann, wodurch sich eine annähernd mittige Lage in Längsrichtung und damit eine optimale Gewichtsverteilung auf dem Chassis-Adapterrahmen 29 ergibt.

Dabei stört das zusätzliche, unterhalb des mittig aufgesetzten Wechselbehälters 1 nun befindliche überzählige Paar von Twistlocks 30 nicht, da der Verriegelungskegel nicht in seine nach oben vorgeschobene Funktionsposition gebracht wird, sondern in der tiefliegenden, nicht kollidierenden Ruheposition verbleibt.

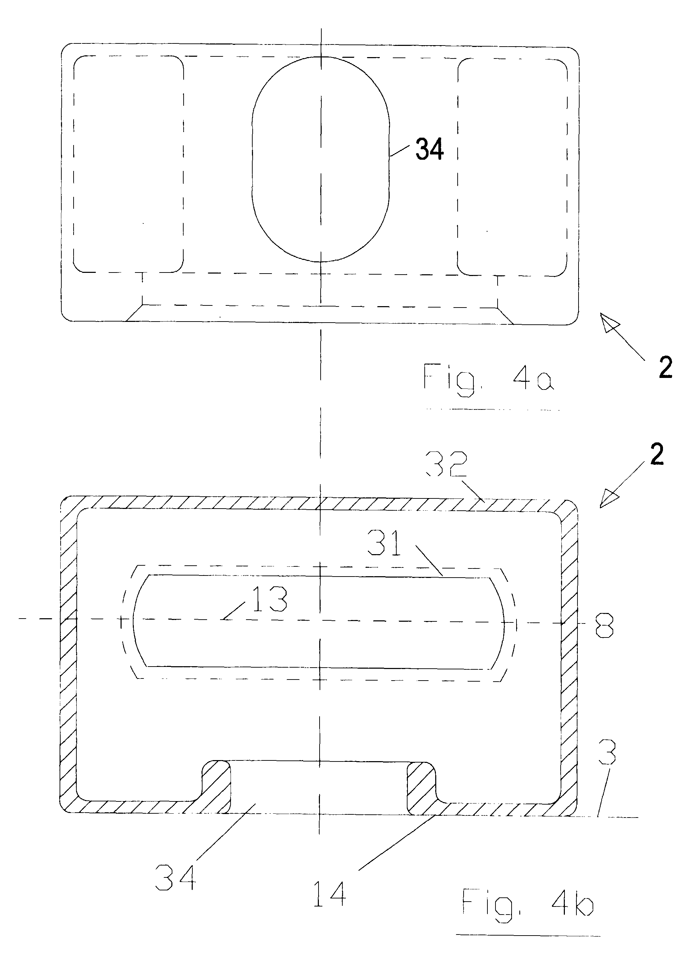

Ein herkömmlicher, genormter Befestigungsbeschlag (EN 284) ist in den Figuren 4a in der Seitenansicht von der Außenseite des Wechselbehälters 1 her dargestellt, und in Figur 4b in der Aufsicht.

Dabei ist zunächst die für die Funktion wichtige, nicht rotationssymetrische, sondern längliche Öffnung 31 im Boden des Gehäuses 32 des Befestigungsbeschlages zu erkennen. Ein nicht dargestellter Befestigungskegel eines Twiatlocks 30 mit etwas kleinerer Grundfläche kann hierdurch von unten eingeführt werden, und verriegelt nach Drehung um 90° den am Wechselbehälter befestigten Befestigungsbeschlag 2 mit dem darunterliegenden Chassis des Fahrzeuges, an welchem der Befestigungskegel drehbar befestigt ist.

Die in der Außenwand 14 angeordnete weitere Öffnung 34 dient dem vertikalen Seilumschlag des Wechselbehälters.

Bei dieser Art des Gehäuses des Befestigungsbeschlages 2 beträgt der Abstand von der Längsmittelachse 13 des Gehäuses bis zu seiner Außenfläche der Außenwand 14, also seine halbe Breite, mindestens 89 mm.

Aufgrund der vorgeschriebenen Positionierung der Längsmittelachse 13 des Befestigungsbeschlages 2 gegenüber der Außenkante 3 des Wechselbehälters 1 verbleibt bei Verwendung dieses bekannten Befestigungsbeschlages nicht mehr genug Raum zur Unterbringung eines in der Ruheposition befindlichen Stützbeines 7, welches aus Stabilitätsgründen üblicherweise ein Rechteckprofil von 80 x 80 mm aufweist und - wie in Längsrichtung betrachtet in den Figuren 1b, 6, 7, 8, 8a dargestellt - nach dem Hochschwenken waagrecht nach innen in einen dafür vorgesehenen Freiraum als Ruheposition eingeschoben werden soll.

Bei diesen Lösungen ist daher die Außenwand 14 des erfindungsgemäßen Befestigungsbeschlages 2 nicht durchgängig ausgebildet. Vielmehr ragt ein oberer Teil 14a soweit innenliegend lotrecht vom Boden 8 aus nach unten, daß das in der Ruhepostition befindliche Stützbein 7 Platz findet.

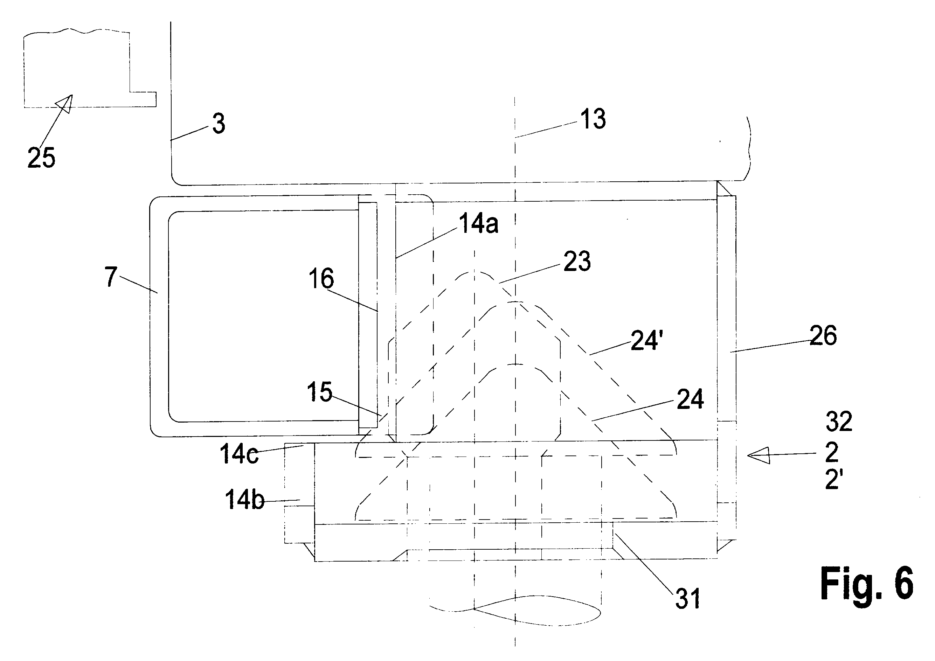

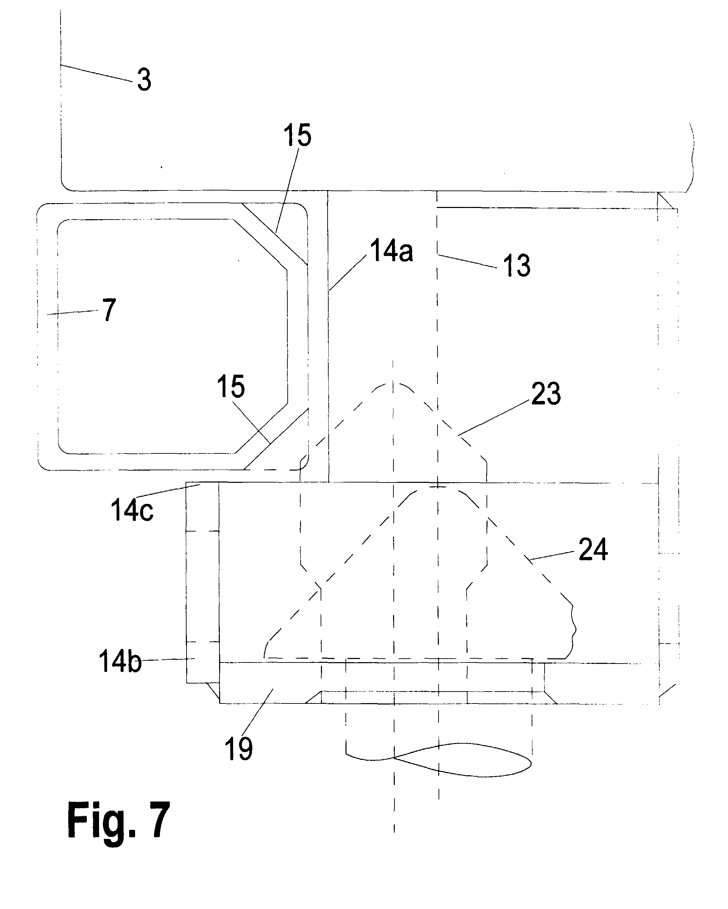

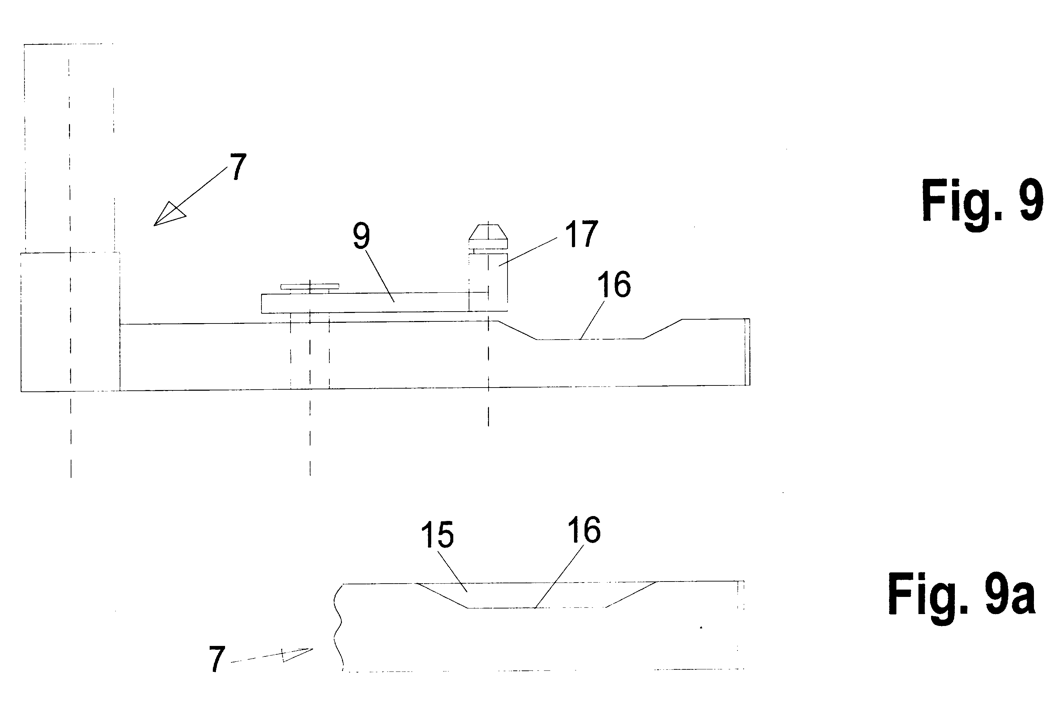

Bei den Lösungen der Fig. 6 und 7 ist das Stützbein im Bereich des Befestigungsbeschlages 2 ausgeklinkt. Die Stützbeinausklinkung ist in den Figuren 9 und 9a ersichtlich. Eine Ausklinkung ist immer dann erforderlich, wenn die Außenkante 3 relativ dicht an die Mittellängsebene 13 des Befestigungsbeschlages 2 heranreicht, und für die uneingeschränkte Profilform des Stützbeines 7 nicht ausreichend Platz ist. Dies ist z.B. bei dem Anbau von seitlich abklappbaren Bordwänden 25 erforderlich, wie in Fig. 6 dargestellt.

Dabei ist sowohl der Bahnkegel 23 eingezeichnet, als auch der Befestigungskegel 24 in seiner Normalposition und in seiner zum Verriegeln hochgehobenen Position (24').

Die Ausklinkung des Stützbeines 7 durch eine entsprechendes Blech 16 muß so gestaltet sein, daß sie weiter außen liegt als der gesamte, obenliegende Bahnkegel 23, und soweit außen, daß auch der Befestigungskegel 24 in der hochgeschobenen Position nicht mit der Ausklinkung 16 bzw. dem dafür verwendeten, auf die Ausklinkung aufgeschweißten Blech kollidiert, welches aus diesem Grunde abgeschrägte Außenkanten 15 aufweist.

Der untere Bereich 14b der Außenwand des Befestigungsbeschlages reicht bis nahe an das Stützbein 7 heran, wobei die Oberkante des unteren Bereiches 14b als Auflagefläche 14c dient.

Demgegenüber ist in Fig. 7 der Befestigungsbeschlag 2, also dessen Bodenplatte gegenüber dem hochgeklappten Stützbein 7 tiefer angeordnet.

Dadurch kollidiert der Befestigungskegel 24 nicht mehr mit dem Profil des Stützbeines 7, und das Stützbein 7 muß lediglich an seinen innenliegenden oberen und unteren Längskanten mit abgeschrägten Ecken 15 ausgestattet werden, um in diesem Bereich eine Kollision mit dem höheren Bahnkegel 23 zu vermeiden.

Auf diese Art und Weise ist jedoch ein geringerer Abstand zwischen der Längsmittelebene 13 des Befestigungsbeschlages 2 und der Außenkante des Stützbeines 7 möglich, was - abhängig von der Breite des Wechselbehälters - deshalb notwendig sein kann, weil der Abstand in der Breite des Wechselbehälters zwischen den Längsmittelebenen 13 zweier Wechselbehälter 2 genormt und nicht veränderbar ist.

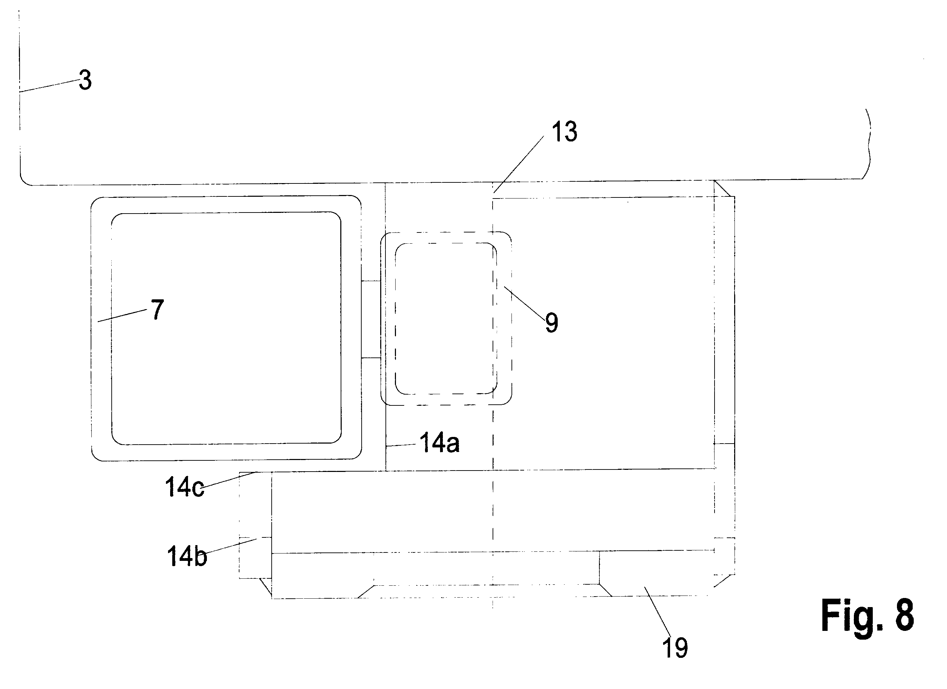

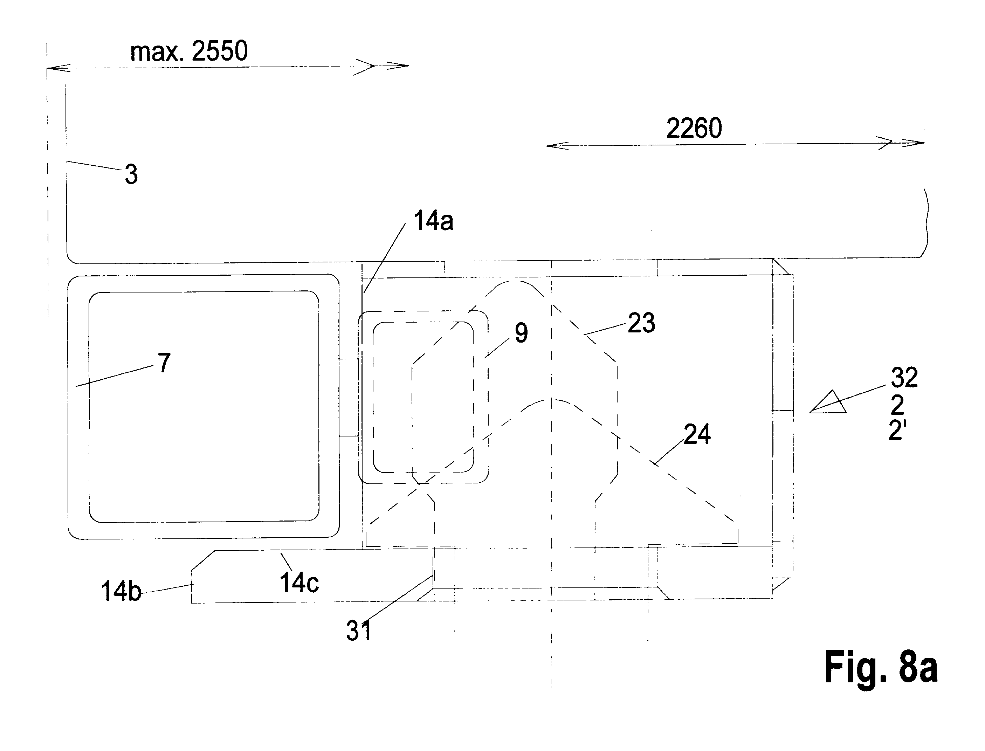

Ein unverändert quadratischer Stützbeinquerschnitt von z.B. 80 mal 80 mm ist in den Figuren 8 und 8a verwendet. Dabei ist der Abstand zwischen der Außenkante 3 des Wechselbehälters und der Längsmittelebene 13 des Befestigungsbeschlages 2 ausreichend groß, um jede Kollision mit dem im Durchmesser kleinen Bahnkegel 23 zu verhindern.

Bei dem in Fig. 8 jedoch nicht ausreichenden Seitenabstand für die Vermeidung jeglicher Kollision mit dem Befestigungskegel 24 wird der Befestigungsbeschlag 2 mit seiner Bodenplatte ausreichend tief gesetzt, um durch einen ausreichenden Höhenabstand diese Kollision zu vermeiden. Deshalb existiert eine senkrechtstehende Außenwand im unteren Bereich 14b.

Im Gegensatz dazu ist der Seitenabstand bei der Lösung gemäß Fig. 8a zwischen dem einzuschiebenden Befestigungskegel 24 und dem Profil des Stützbeines 3 so groß, daß der Boden des Befestigungsbeschlages 2 unmittelbar unterhalb des hochgeklappten Stützbeines 7 verlaufen kann, und dort als waagerechter Schenkel 14c dessen Abstützung übernimmt.

Alle diese Lösungen werden von der maximal vorgegebenen Breite eines Wechselbehälters von 2,55 m gemäß Straßenverkehrsordnung sowie dem Abstand der Längsmittelebenen 13 zweier Befestigungsbeschläge 2 in der Breite des Wechselbehälters von 2,26 m bestimmt.

Der obere Bereich 14 a endet in Figur 8 oberhalb der Unterkante des Stützbeines 7, und noch oberhalb der maximal möglichen Lage eines eingeführten Befestigungskegels 24 oder eines alternativen Bahnkegels 23.

Wegen der nach unten sich stark verbreiternden Kontur dieser Befestigungselemente ragt der untere Bereich 14b der Außenwand deutlich weiter außen vom Boden des Gehäuses 32 des Befestigungsbeschlages 2 aus nach oben als der obere Bereich 14a, und endet unterhalb des Stützbeines 7.

Daran schließt sich ein waagrechter Schenkel als Auflage für das Stützbein an, der sich vorzugsweise vom unteren Bereich 14b aus nach innen zur Mitte des Gehäuses 32 hin erstreckt, aber auch einen demgegenüber entgegengesetzt nach außen weisenden Schenkel zur Verbreiterung der Auflagefläche aufweisen kann.

Das nach innen ragende freie Ende dieses waagrechten Schenkels 14c hat dabei keine direkte Verbindung mit dem oberen Bereich 14a, und endet auch vor der innenliegenden senkrechten Fläche des Stützbeines 7.

Dadurch kann die untere innenliegende, gegen die Mitte des Gehäuses 32 gerichtete, Ecke 15 des Profils des Stützbeines 7 in die dadurch entstehende Lücke hineinragen, während bei Verbindung der beiden oberen und unteren Teile 14a, 14b mit einem gleichstarken Material in Form einer Schräge etc. bereits eine Kollision bzw. ein Klappern gegeben wäre.

Um die Verschmutzung möglichst gering zu halten, ist es dabei noch denkbar, die beiden freien Enden des oberen und unteren Bereiches 14a, 14b über ein äußerst dünnwandiges Material miteinander zu verbinden.

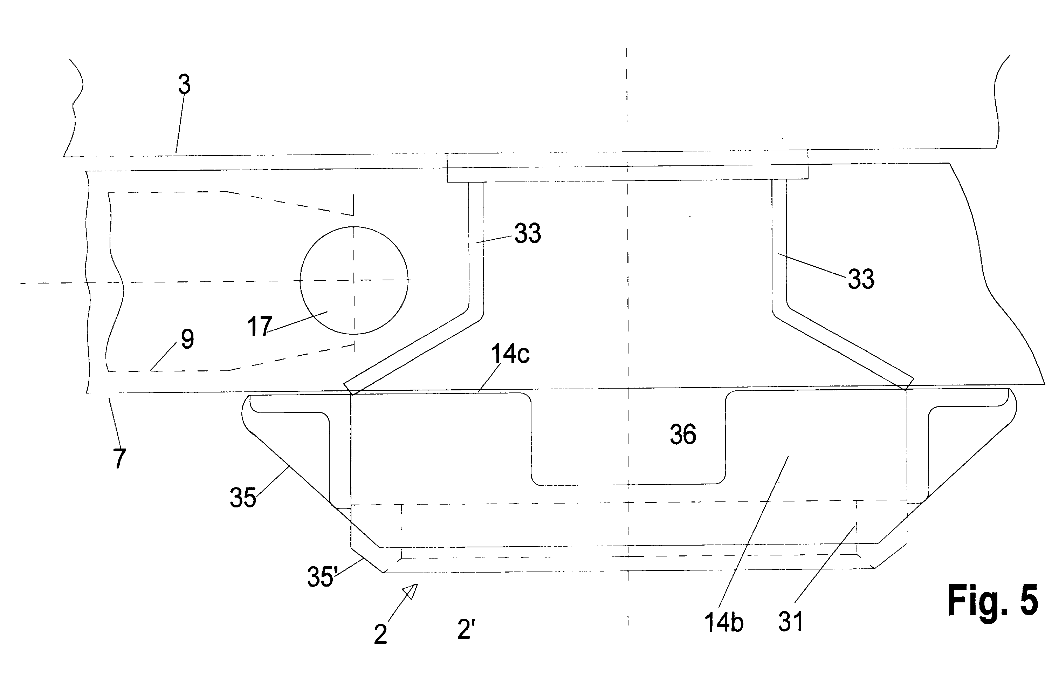

Zur Erreichung einer großen Schrägstrebenlänge wird entsprechend Fig. 5 der Befestigungsbeschlag 2 - in der Seitenansicht betrachtet - mit Seitenwänden 33 versehen, welche in ihrem mittleren Bereich gekröpft sind und daher im oberen Bereich etwa senkrecht im geringen gegenseitigen Abstand verlaufen, und im unteren Bereich schräg voneinander abstreben. Zusätzlich sind die Endkanten 35 der unteren Bereiche 14b der Außenwand abgeschrägt, und ebenso die Bodenplatte 31 mit einer Abschrägung 35' versehen, um durch diese Abschrägungen einen möglichst großen Freiraum für die einfedernden Reifen des Trägerfahrzeuges zu schaffen, wobei jeder zusätzlich gewonnene cm sehr wertvoll ist.

Die Außenwand in ihrem unteren Bereich 14b weist zusätzlich in der Mitte eine von der Oberkante nach unten weisende Ausnehmung 36 auf. Das hochgeklappte Stützbein 7 verläuft oberhalb dieser Ausnehmung 36, so daß hierdurch das innere des Befestigungsbeschlages immer zugänglich bleibt.

In den Figuren 9 ist das Stützbein 7 in der Seitenansicht mit einer Ausklinkung 16 dargestellt. Die entsprechende Querschnittsdarstellung ist Fig. 6 zu entnehmen. In Fig. 9a ist das Stützbein 7 dabei mit einer Ausklinkung lediglich im Bereich der Kante 15 dargestellt, wie der Querschnittsdarstellung der Fig. 7 zu entnehmen.

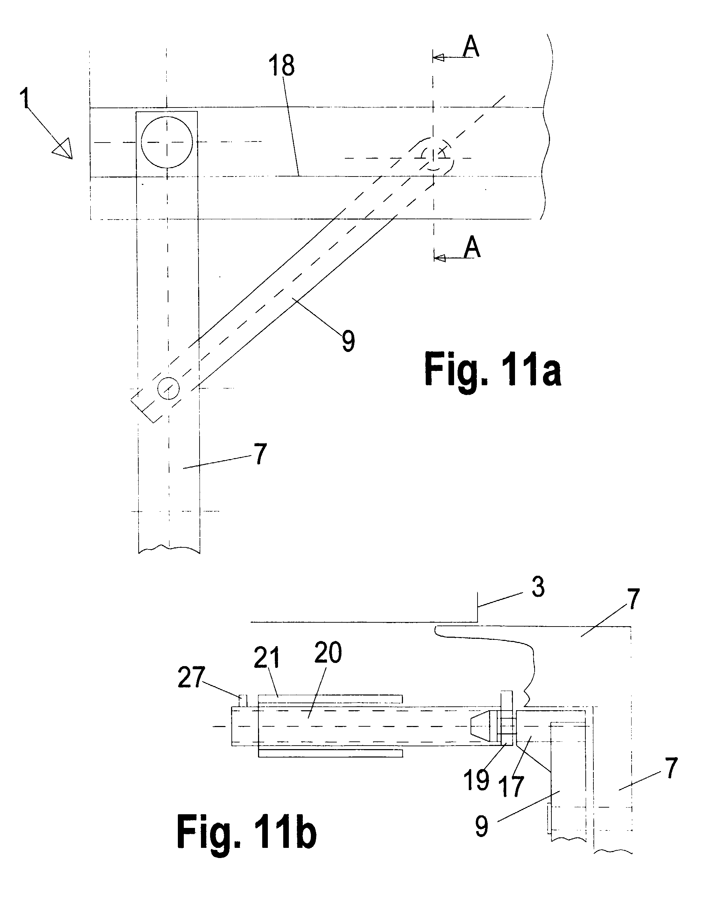

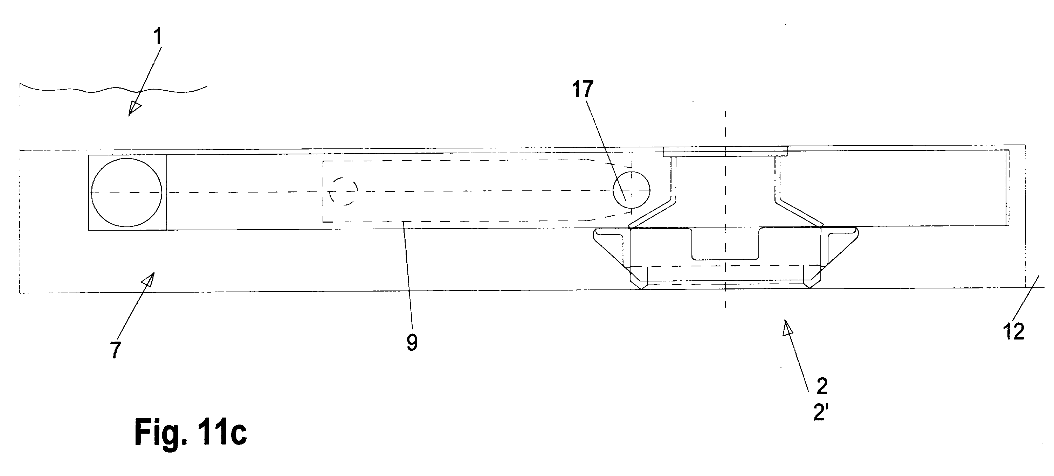

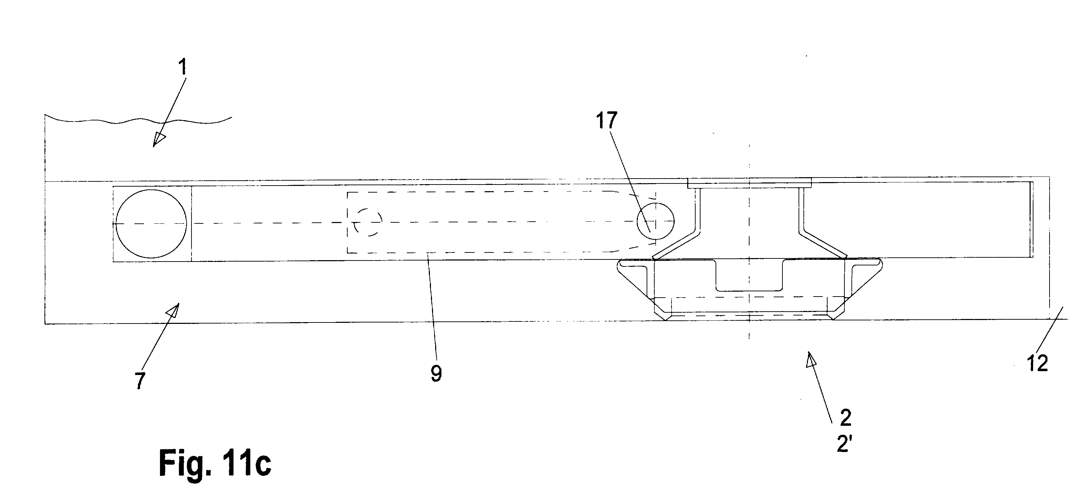

In den Figuren 11 ist die Schrägstrebe 9 im Verstrebungszustand dargestellt, sowie der zugehörige Einrastmechanismus in Fahrzeuglängsrichtung betrachtet in Fig. 11b.

Nach dem Hochklappen der Schrägstrebe 9 aus der Parallellage zum Stützbein 7, wie in Fig. 11a dargestellt, muß der am freien Ende der Strebe 9 angeordnete Dorn 17, der von der Schrägstrebe nach hinten abragt, mit dem in Querrichtung des Wechselbehälters 3 verschiebbaren Teleskoprohr 20 verrastet werden, um die Strebe 9 zu sichern. Zu diesem Zweck wird das Teleskoprohr 20 gemäß Fig. 11 in der Öse 21 nach rechts verschoben, bis der Dorn 17 sich innerhalb des Teleskoprohres 20 befindet. Diese Lage wird durch einen Nocken 27 am innenliegenden Ende des Teleskoprohres 20 abgesichert, welcher der Einschubweg des Teleskoprohres begrenzt.

Die Öse 21 für das Teleskoprohr 20 liegt dabei mit ihrer Unterkante in gleicher Höhe mit der Unterkante des Befestigungsbeschlages 2.

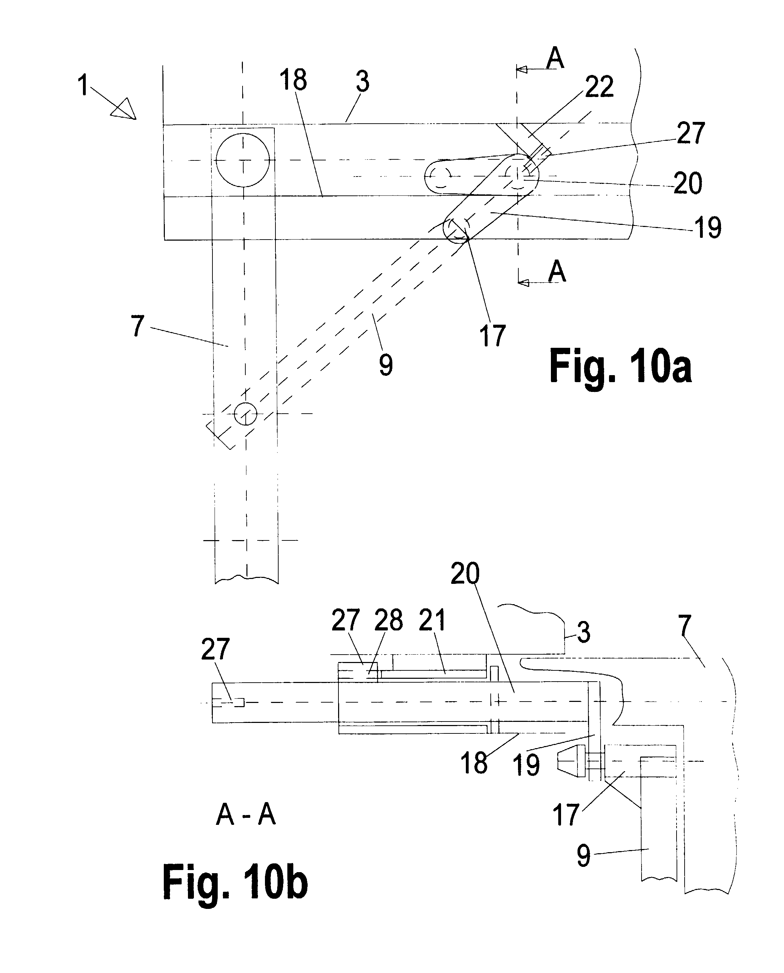

Demgegenüber zeigen die analogen Figuren 10a, 10b eine Lösung, bei der - siehe Fig. 1b - die Schrägstrebe 9 wegen der Begrenzung im hochgeklappten Ruhezustand durch den Befestigungsbeschlag 2 nicht so lang ausgebildet werden kann wie es für eine gute Verstrebung zwischen Stützbein 7 und dem Bodenrahmen 8 des Wechselbehälters wünschenswert wäre.

Die Schrägstrebe 9 wird dabei kürzer ausgebildet, als die Gesamtlänge der eigentlichen Verstrebung ausmacht. Die fehlende Differenz wird durch ein Einhakblech 19 erreicht, welches vom Teleskoprohr 20 aus radial abstrebt, und an seinem freien Ende die Bohrung oder Ausnehmung zur Aufnahme des Dornes 17 aufweist.

Damit eine solche Verstrebung stabil ist, muß im Verstrebungszustand die Drehung des Teleskoprohres blockiert sein. Aus diesem Grund weist die Öse 21 an ihrem hinteren Ende in einer Winkelposition einen Schlitz 28 auf für die Aufnahme eines entsprechenden Nockens 27, der sich in einer bestimmten Drehlage auf dem hinteren Ende des Teleskoprohres 20 nach außen abragend befindet.

Zum Anordnen der Verstrebung wird die Schrägstrebe 9 in die dafür vorgesehene Position gebracht, und anschließend das gemäß Fig. 10 noch in der linken Position befindliche Teleskoprohr 20 zunächst verschwenkt, so daß sich das Einhakblech 19 von der gestrichelten, etwa waagerechten Position aus nach unten verschwenkt, wie in Fig. 10a dargestellt. Der Schwenkwinkel kann durch einen zusätzlichen Anschlagnocken 22 an der Bodengruppe 8 des Wechselbehälters begrenzt werden.

Anschließend wird das Teleskoprohr 20 gemäß Fig. 10b nach rechts verschoben, wodurch sich das Einhakblech 19 über den Dorn 17 schiebt und der Nocken 27 des Teleskoprohres 20 in den Schlitz 28 der Öse 21 gelangt, wodurch eine drehmoment- und biegesteife Verstrebung erzielt wird.

Die Anordnung des Teleskoprohres und auch die Schwenkwinkelbegrenzung des Einhakbleches 19 sind dabei so gewählt, daß ein ausreichender Freiraum für die untervorhandenen Trägerfahrzeuge gegeben ist.

Die Stützbeine 7 sind so lang, daß die Stützhöhe 10 von der Unterkante des Bodens 8 des Wechselbehälters 1 zum Untergrund mindestens 102 cm beträgt.

## Patentansprüche

1. Wechselbehälter für LKW u. dgl. mit
- vier Befestigungsbeschlägen (2, 2') in bzw. an dem Außenbereich des Bodens des Wechselbehälters (1), wobei
- die vorderen Befestigungsbeschläge (2) von dem vorderen Ende (4) den gleichen Versatz (6) aufweisen wie die hinteren Befestigungsbeschläge (2') von dem hinteren Ende (5),
- der Wechselbehälter (1) vier Stützbeine (7) symmetrisch im Außenbereich des Bodens (8) verschwenkbar zwischen einer senkrechten Stützposition und einer hochgeklappten Ruheposition aufweist, die zwischen den Befestigungsbeschlägen (2, 2') und dem jeweils nächstliegenden Ende (4 bzw. 5) des Wechselbehälters angeordnet sind,
**dadurch gekennzeichnet, daß**
- der Wechselbehälter maximal die halbe Normlänge normaler Wechselbehälter aufweist,
- der Versatz (6) der gleiche ist wie der entsprechende Versatz bei normalen Wechselbehältern,
- die Stützbeine (7) zur Quer-Mittelebene des Wechselbehälters hin in die Ruheposition hochklappbar sind und
- die Stützbeine (7) in der eingeklappten Ruheposition im Außenbereich in Längsrichtung den nächstliegenden Befestigungsbeschlag (2, 2') überlappen und
- der in Längsrichtung betrachtete Abstand zwischen der Innenkante des in die Ruhelage hochgeklappten Stützbeines (7) und der senkrechten Längsmittelachse (13) des Befestigungsbeschlages (2, 2') noch so groß ist, daß im Befestigungsbeschlag (2, 2') ein ausreichender Funktionsraum für den Befestigungskegel (24) bzw. Bahnzapfen (23) verbleibt.

2. Wechselbehälter nach Anspruch 1,
**dadurch gekennzeichnet, daß**
der in Längsrichtung betrachtete Abstand zwischen dem in die Ruhelage hochgeklappten Stützbein (7) und der senkrechten Längsmittelachse (13) des Befestigungsbeschlages (2, 2') geringer ist als die halbe Breite eines normgerechten Befestigungsbeschlages.

3. Wechselbehälter nach Anspruch 1 oder 2,
**dadurch gekennzeichnet, daß**
die der Außenseite des Bodens (8) zuweisende Außenwand (14) des Befestigungsbeschlages (2, 2') in Längsrichtung des Wechselbehälters (1) betrachtet in ihrem oberen Bereich (14a) nicht mit ihrem unteren, weiter außen angeordneten Bereich (14b) fluchtet und der obere und untere Bereich (14a, 14b) der Außenwand (14) des Befestigungsbeschlages (2, 2') wenigstens teilweise nicht miteinander verbunden sind.

4. Wechselbehälter nach Anspruch 3,
**dadurch gekennzeichnet, daß**
der obere Bereich (14a) und der untere Bereich (14b) jeweils etwa lotrecht stehen und der untere Bereich (14b) bis nahe an die Unterseite des Stützbeines (7) in dessen Ruheposition heranreicht.

5. Wechselbehälter nach Anspruch 4,
**dadurch gekennzeichnet, daß**
der untere Bereich (14b) der Außenwand (14) an seinem oberen Ende einen etwa waagerecht verlaufenden Schenkel (14c) aufweist, der als Auflagefläche für das Stützbein (7) dient.

6. Wechselbehälter nach Anspruch 3,
**dadurch gekennzeichnet, daß**
der Befestigungsbeschlag (2, 2') keine der Außenseite des Bodens (8) zuweisende, im wesentliche senkrecht stehende, Außenwand (14) aufweist.

7. Wechselbehälter nach einem der vorhergehenden Ansprüche,
**dadurch gekennzeichnet, daß**
das Stützbein (7) wenigstens im Bereich, der in der Ruheposition den Befestigungsbeschlag (2, 2') überlappt, ein gegenüber dem oberen Bereich des Stützbeines (7) einen auf der Innenseite reduzierten Profilquerschnitt aufweist.

8. Wechselbehälter nach Anspruch 7,
**dadurch gekennzeichnet, daß**
die Breite des Stützbeines (7) - betrachtet im ausgeklappten Zustand in Längsrichtung des Wechselbehälters - über die gesamte Längserstreckung gegenüber dem oberen Bereich reduziert ist.

9. Wechselbehälter nach Anspruch 8,
**dadurch gekennzeichnet, daß**
das im wesentlichen rechteckige Profil des Stützbeines (7) im unteren, den Befestigungsbeschlag (2, 2') überlappenden, Bereich wenigstens an der nach innen unten, gegen den Befestigungskegel im Befestigungsbeschlag weisenden, Eck (15) abgeschrägt ist.

10. Wechselbehälter nach einem der vorhergehenden Ansprüche,
**dadurch gekennzeichnet, daß**
in der Seitenansicht des Wechselbehälters der Befestigungsbeschlag wenigstens auf der der Schrägstrebe (9) zugewandten Seite eine Seitenwand (33) aufweist, die im oberen Bereich näher an der Mitte des Befestigungsbeschlages (2) liegt als im unteren Bereich.

11. Wechselbehälter nach Anspruch 10,
**dadurch gekennzeichnet, daß**
die Seitenwand (33) im oberen Bereich senkrecht verläuft und im unteren Bereich sich schräg nach außen erstreckt und daß die schräg nach außen verlaufende Orientierung der Seitenwand (33) so tief angeordnet ist, daß darüber das freie, spitz zulaufende Ende der Schrägstrebe (9) Platz findet und darunter der Befestigungskegel (24).

12. Wechselbehälter nach einem der vorhergehenden Ansprüche,
**dadurch gekennzeichnet, daß**
der untere Bereich (14b) der Außenwand (14) von der Oberkante her nach unten eine Ausnehmung (36) aufweist, die bei in der Ruheposition befindlichem, hochgeklapptem Stützbein (7) unterhalb des Stützbeines (7) einen Zugang ins Innere des Befestigungsbeschlages (2) ermöglicht.

13. Wechselbehälter nach einem der vorhergehenden Ansprüche,
**dadurch gekennzeichnet, daß**
die Schrägstrebe (9) an ihrem freien Ende einen nach hinten, unter den Wechselbehälter hinein abragenden Dorn (17) aufweist, der durch Schieben in eine Öffnung oder Ausnehmung eines in Querrichtung des Wechselbehälters an diesem befestigten Bauteiles gesichert werden kann.

14. Wechselbehälter nach Anspruch 13,
**dadurch gekennzeichnet, daß**
die Ausnehmung der Hohlraum im stirnseitigen Ende eines Teleskoprohres (20) ist, welches in einer fest mit dem Boden (8) des Wechselbehälters angeordneten Hülse (21) verschiebbar ist.

15. Wechselbehälter nach Anspruch 14,
**dadurch gekennzeichnet, daß**
die Ausnehmung im freien Ende eines radial vom Teleskoprohr (20) abragenden Einhakblech (19) angeordnet ist, welches drehfest mit dem Teleskoprohr (20) verbunden ist und in einer Winkelposition vom Teleskoprohr (20) ein Nocken (27) radial abragt, der in einen entsprechenden Schlitz (28) der das Telskoprohr (20) aufnehmenden Hülse (21) paßt, wenn das Einhakblech (19) über den Dorn (17) geschoben ist.

## Claims

1. An interchangeable container for heavy goods vehicles and the like comprising
- four securing fittings (2, 2') in or at the outside region of the bottom of the interchangeable container (1), wherein
- the front securing fittings (2) involve the same displacement (6) from the front end (4) as the rear securing fittings (2') from the rear end (5), and
- the interchangeable container (1) has four support legs (7) symmetrically in the outside region of the bottom (8) pivotably between a perpendicular support position and an upwardly pivoted rest position, which are arranged between the securing fittings (2, 2') and the respectively most closely adjacent end (4 or 5 respectively) of the interchangeable container,
characterised in that
- the interchangeable container is at a maximum half the standard length of normal interchangeable containers,
- the displacement (6) is the same as the corresponding displacement in the case of normal interchangeable containers,
- the support legs (7) are pivotable upwardly into the rest position towards the transverse central plane of the interchangeable container, and
- the support legs (7) in the inwardly pivoted rest position overlap in the outside region in the longitudinal direction the most closely adjacent securing fitting (2, 2') and
- the spacing considered in the longitudinal direction between the inner edge of the support leg (7) when pivoted upwardly into the rest position and the perpendicular longitudinal centre line (13) of the securing fitting (2, 2') is still so great that there remains in the securing fitting (2, 2') a sufficient functional space for the securing taper member (24) or railway spigot member (23).

2. An interchangeable container according to claim 1 characterised in that the spacing as considered in the longitudinal direction between the support leg (7) when pivoted upwardly into the rest position and the perpendicular longitudinal centre line (13) of the securing fitting (2, 2') is less than half the width of a standardised securing fitting.

3. An interchangeable container according to claim 1 or claim 2 characterised in that the outside wall of the securing fitting (2, 2'), which faces towards the outside of the bottom (8), when considered in the longitudinal direction of the interchangeable container (1), is not aligned in its upper region (14a) with its lower, further outwardly disposed region (14b), and the upper and lower regions (14a, 14b) of the outside wall (14) of the securing fitting (2, 2') are at least in part not connected together.

4. An interchangeable container according to claim 3 characterised in that the upper region (14a) and the lower region (14b) are each approximately perpendicular and the lower region (14b) extends to close to the underside of the support leg (7) in the rest position thereof.

5. An interchangeable container according to claim 4 characterised in that at its upper end, the lower region (14b) of the outside wall (14) has a substantially horizontally extending limb (14c) which serves as a contact surface for the support leg (7).

6. An interchangeable container according to claim 3 characterised in that the securing fitting (2, 2') does not have a substantially perpendicularly disposed outside wall (14) which faces towards the outside of the bottom (8).

7. An interchangeable container according to one of the preceding claims characterised in that, at least in the region which overlaps the securing fitting (2, 2') in the rest position, the support leg (7) is of a profile cross-section which is reduced with respect to the upper region of the support leg (7) on the inside.

8. An interchangeable container according to claim 7 characterised in that the width of the support leg (7) - as considered in the outwardly pivoted condition in the longitudinal direction of the interchangeable container - is reduced over the entire longitudinal extent with respect to the upper region.

9. An interchangeable container according to claim 8 characterised in that the substantially rectangular profile of the support leg (7) is bevelled in the lower region overlapping the securing fitting (2, 2') at least at the corner (15) which faces inwardly and downwardly and towards the securing taper member in the securing fitting.

10. An interchangeable container according to one of the preceding claims characterised in that in a side view of the interchangeable container the securing fitting has at least on the side towards the inclined strut (9) a side wall (33) which in the upper region is closer to the centre of the securing fitting (2) than in the lower region.

11. An interchangeable container according to claim 10 characterised in that the side wall (33) extends perpendicularly in the upper region and extends inclinedly outwardly in the lower region and that the inclinedly outwardly extending orientation of the side wall (33) is arranged so deep that the free converging end of the inclined strut (9) has space thereabove and the securing taper member (24) has space therebelow.

12. An interchangeable container according to one of the preceding claims characterised in that the lower region (14b) of the outside wall (14) has from the upper edge downwardly an opening (36) which, when the support leg (7) is pivoted upwardly and is in the rest position, permits beneath the support leg (7) access to the interior of the securing fitting (2).

13. An interchangeable container according to one of the preceding claims characterised in that at its free end the inclined strut (9) has a bar (17) which projects rearwardly under the interchangeable container and which can be secured by insertion into an opening or recess in a component which is fixed to the interchangeable container in the transverse direction thereof.

14. An interchangeable container according to claim 13 characterised in that the recess is the cavity in the end of a telescopic tube (20) which is displaceable in a sleeve (21) arranged fixedly to the bottom (8) of the interchangeable container.

15. An interchangeable container according to claim 14 characterised in that the recess is arranged in the free end of a hooking engagement plate (19) which projects radially from the telescopic tube (20) and which is non-rotatably connected to the telescopic tube (20) and a projection (27) projects radially in an angular position from the telescopic tube (20), the projection (27) fitting into a suitable slot (28) in the sleeve (21) which accommodates the telescopic tube (20) when the hooking engagement plate (19) is pushed over the bar (17).

## Revendications

1. Bennes interchangeables pour camions et similaires avec
- quatre ferrures de fixation (2, 2') dans respectivement sur la zone externe du fond de la benne interchangeable (1),
- les ferrures de fixation avant (2) présentant le même déport (6) depuis l'extrémité avant (4) que les ferrures de fixation arrière (2') depuis l'extrémité arrière (5),
- la benne interchangeable (1) présentant quatre pied-supports (7) pivotant de manière symétrique dans la zone externe du fond (8) entre une position verticale de soutien et une position de repos rabattue, pieds qui sont disposés entre les ferrures de fixation (2, 2') et l'extrémité respective la plus proche (4 respectivement 5) de la benne interchangeable.
caractérisée en ce que
- la benne interchangeable présente au maximum la demi-longueur normalisée d'une benne interchangeable normale,
- le déport (6) est le même que le déport correspondant des bennes interchangeables,
- les pieds-supports (7) sont rabattus vers le plan médian transversal de la benne interchangeable en position de repos et
- les pieds-supports (7) en position de repos repliée chevauchent la ferrure de fixation (2, 2') la plus proche dans la zone externe dans le sens longitudinal et
- la distance vue dans le sens de la longueur entre le bord interne du pied-support (7) relevés en position de repos et l'axe médian longitudinal vertical (13) de la ferrure de fixation (2, 2') est suffisamment grand pour que dans la ferrure de fixation (2, 2'), il reste un espace de fonction suffisant pour le cône de fixation (24) respectivement pour le pivot ferroviaire (23).

2. Benne interchangeable selon la revendication 1 caractérisée en ce que la distance vue dans le sens de la longueur entre le pied-support (7) relevé en position de repos et l'axe médian longitudinal vertical (13) de la ferrure de fixation (2, 2') est inférieure à la demi-largeur d'une ferrure de fixation normalisée.

3. Benne interchangeable selon la revendication 1 ou 2, caractérisée en ce que la paroi externe (4) de la ferrure de fixation (2, 2'), tournée vers la face externe du fond (8), observée dans sa zone supérieure (14a), n'est pas alignée avec sa zone (14b) inférieure disposée plus à l'extérieur et les zones supérieure et inférieure (14a, 14b) de la paroi externe (14) de la ferrure de fixation (2, 2') ne sont pas reliées du moins partiellement entre elles.

4. Benne interchangeable selon la revendication 3, caractérisée en ce que la zone supérieure (14a) et la zone inférieure (14b) sont sensiblement verticales et la zone inférieure (14b) s'étend jusque tout près de la face inférieure du pied-support (7) quand celui-ci est en position de repos.

5. Benne interchangeable selon la revendication 3, caractérisée en ce que la zone inférieure (14b) de la paroi externe (14) présente sur son extrémité supérieure un bras (14c) s'étendant sensiblement à l'horizontal qui sert de surface d'application pour le pied-support (7).

6. Benne interchangeable selon la revendication 3, caractérisée en ce que la ferrure de fixation (2, 2') présente aucune paroi externe (14) tournée vers la face externe du fond (8) et sensiblement perpendiculaire.

7. Benne interchangeable selon l'une des revendications précédentes, caractérisée en ce que le pied-support (7) au moins dans la zone qui chevauche en position de repos la ferrure de fixation (2, 2'), présente une section transversale profilée réduite sur la face interne en regard de la partie supérieure du pied-support (7).

8. Benne interchangeable selon la revendication 7, caractérisée en ce que la largeur du pied-support (7) - vue à l'état déplié dans le sens de la longueur de la benne interchangeable - est réduite sur toute l'extension longitudinale par rapport à la zone supérieure.

9. Benne interchangeable selon la revendication 8, caractérisée en ce que le profilé sensiblement quadrangulaire du pied(support (7) est biseauté dans la zone inférieure chevauchant la ferrure de fixation (2, 2') au moins dans le coin (15) dirigé à l'encontre du cône de fixation dans la ferrure de fixation en bas vers l'intérieure.

10. Benne interchangeable selon l'une des revendications précédentes, caractérisée en ce qu'en vue latérale de la benne interchangeable, la ferrure de fixation présente au moins sur la face tournée vers la jambe de force inclinée (9) une paroi latérale (33) qui se trouve dans la partie supérieure plus près du milieu de la ferrure de fixation (2) que dans la zone inférieure.

11. Benne interchangeable selon la revendication 10, caractérisée en ce que la paroi latérale (33) s'étend verticalement dans la partie supérieure et s'étend de manière inclinée vers l'extérieur et en ce que l'orientation de la paroi latérale '33) s'étendant de manière inclinée vers l'extérieure est placée si bas qu'il y a de la place dans l'espace supérieure pour l'extrémité libre se terminant en pointe de la jambe de force inclinée (9) et dans l'espace inférieure pour le cône de fixation (24).

12. Benne interchangeable selon l'une des revendications précédentes, caractérisée en ce que la zone inférieure (14b) de la paroi externe (14) présente depuis le bord supérieur vers le bas un évidemment (36) qui permet en dessous du pied-support (7) un accès à l'intérieur de la ferrure de fixation (2) quand le pied-support (7) est relevé en position de repos.

13. Benne interchangeable selon l'une des revendications précédentes, caractérisée en ce que la jambe de force (9) présente sur son extrémité libre un mandrin (17) faisant saillie à l'intérieur vers l'arrière en dessous de la benne interchangeable qui peut être fixé en étant poussé dans une ouverture ou évidemment d'un composant fixé dans le sens transversal de la benne interchangeable.

14. Benne interchangeable selon la revendication 14, caractérisée en ce que l'évidemment de la cavité se trouve dans l'extrémité en face avant d'un tube télescopique (20) qui est coulissant dans un manchon (21) relié fixement au fond (8) de la benne interchangeable.

15. Benne interchangeable selon la revendication 14, caractérisée en ce que l'évidemment est disposé dans l'extrémité libre d'une tôle formant crochet (19) faisant saillie radialement du tube télescopique (20), qui est reliée de manière fixe en rotation au tube télescopique (20) et en ce que dans une position angulaire du tube télescopique (20) une came (27) fait saillie radialement qui s'engage dans une fente correspondante (28) du manchon (21) logeant le tube télescopique (20) si la tôle formant crochet (19) est enfilée sur le mandrin (17).
